# EUROPEAN PATENT APPLICATION

(11) **EP 1 829 602 A1**
(43) Date of publication of application: **05.09.2007**
(21) Application number: 05806554.1
(22) Date of filing: 17.10.2005
(51) Int. Cl.: B01D 63/00

(54) **REACTOR FOR GAS SEPARATION AND/OR FOR CARRYING OUT CHEMICAL REACTIONS AND METHOD FOR THE PRODUCTION THEREOF**

(30) Priority: 25.10.2004 RU 2004130966
(71) Applicant: Limited Liability Company "United Research and Development Centre", Moscow 119333 (RU)
(72) Inventor: MORDKOVICH, Vladimir Zalmanovich, Moscow, 117209 (RU); KHARITONOV, Dmitry Nikolaevich, Moscow, 117246 (RU); AVETISOV, Alexandr Konstantinovich, Moscow, 117219 (RU); BAICHTOK, Yulu Kivovich, Moscow, 123154 (RU); POLITOVA, Ekaterina Dmitrievna, Moscow, 125319 (RU); DUDAKOVA, Nataliya Vladimirovna, Moscow, 107589 (RU); SUVORKIN, Sergei Vyacheslavovich, Moskovskaya obl., 144007 (RU); KOSAREV, Gennady Vladimirovich, Moscow, 111555 (RU)
(74) Representative: Andrae, Steffen
(86) International application number: PCT/RU2005/000511
(87) International publication number: WO 2006/046887

(57) **Abstract**

The invention relates to membrane engineering, in particular to reactors for gas separation and/or for carrying out chemical reactions, namely to a reactor for extracting oxygen from an oxygen-containing gas and to a method for manufacturing the said reactor. The invented reactor for gas separation and/or for carrying out chemical reactions comprises a body (1), a ceramic membrane (2) and a connecting element (3) which is disposed there between and made of an alloy containing elements of the VII and VI groups of the Mendeleev's periodic table, wherein an aluminum oxide layer is formed on the connecting element surface which is adjacent to the membrane. The invented method for manufacturing the reactor for gas separation and/or for carrying out chemical reactions consists in fixing the ceramic membrane (2) in the reactor body (1) by means of the connecting element made of the alloy containing elements of the VII and VI groups of the Mendeleev's periodic table, wherein the used alloy is added with aluminum, prior to fixing the membrane (2), the connecting element (3) is heated in an oxygen-containing gas at a temperature ranging from 800 to 1100°C or an aluminum oxide layer is applied to the connecting element surface which is adjacent to the membrane.

Reactor for gas separation and/or for carrying out chemical reactions and method for manufacturing thereof.

## Description

### Field of invention

This invention relates to the area of membrane technologies and concerns reactor for gases separation and/or carrying out chemical reactions, in particular, reactor for oxygen extraction from oxygen-containing gas, as well as method of the reactor manufacturing.

### Prior art

Gases separation and/or chemical reactions carrying out with membrane technologies and, in particular, oxidative conversion of hydrocarbon gas with application of oxygen-permeable membranes is a promising direction of gas processing development. Introduction of membrane separation technology, in particular, separation of air in membrane reactors with oxygen-permeable membrane allows significant (up to 30%) reduction of energy consumption and capital cost in syngas production (mixture of carbon monoxide and hydrogen) and hence costs of its derivatives, including hydrogen. Important advantage of membrane process is also the possibility of module design of reactor providing for easier production scale-up.

Oxygen-permeable membrane used for gas separation, in particular, for oxygen extraction and /or carrying out conversion process in membrane reactor, is a ceramic plate or tube or a structure of other convenient form. Membrane has sufficient oxygen permeability at high temperatures typical for the process of hydrocarbon gas partial oxidation. Membrane is at the same time gas-tight, that is manufactured from nonporous material. Membranes used for air separation possess ionic or mixed electronic-ionic conductivity. In both cases ions of oxygen, driven by gradient of partial pressures, come through dense nonporous membrane at high velocity and with absolute selectivity.

Membrane is at the same time gas-tight, that is manufactured from nonporous material. Membranes used for air separation possess ionic or mixed electronic-ionic conductivity. In both cases ions of oxygen, driven by gradient of partial pressures, come through dense nonporous membrane at high velocity and with absolute selectivity. Main problem in designing membrane reactors is difference in thermal expansion coefficients of metal the reactor is made from, and ceramics used to make the membrane, which results in destroying surface of membrane and reactor connection.

To resolve this problem high-temperature sealants are developed and applied for connection of heterogeneous materials. Thus, for connection of metal and ceramics a combination of ceramics and glass is used, for example. However such sealants can be used only under pressure close to normal and at rather low operating temperatures, not exceeding 600°C (X. Qi, F.T. Akin, Y.S. Lin, J. Memb. Sci., 2001, v. 193, p. 185). There are known sealants based on soft alloys of gold and silver; their disadvantage is high cost (O.C. Paiva, M.A. Barbosa, J. Mater. Sci., 1997, v. 32, p. 653).

There is also a known example of mechanical sealing, at which surfaced of the connected parts contact each other but there is no fusion of metallic and ceramic materials these parts are made from. Metallic and ceramic parts still move against each other and tension increases caused by different coefficients of thermal expansion of the materials at heating and cooling (J.A. Lane, S.J. Benson et all, Solid State Ionics, 1999, v. 121, p. 201). Patent US 6,302,402 describes prefabricated reactor with membrane fixed inside with a packing ring of complicated form made of composite material containing precious metals. It also describes method of the reactor manufacturing comprising sealing of membrane at high temperatures (400°C to 1000°C). Ring is made from metal selected from the group including iron, nickel, chromium, tungsten, molybdenum or cobalt, and coated with a layer of another metal (such as gold, copper, nickel, palladium, platinum). Disadvantage of this technical solution is complexity of manufacturing and high cost.

There is also a reactor described in literature where ceramic membrane is sealed with high-temperature nickel-containing solder (Report on USA Department of Energy grant [S. Bandopadhyay, N. Nagabhushana. Quarterly Report. School of Mineral Engineering. University of Alaska Fairbanks. 2000 // DOE Award #DE-FC26-99FT400054]). Despite of good wetting properties of connected surfaces with nickel-containing solders which possess relatively low chemical activity, intensive interaction between solder and ceramic membrane was identified, which causes cracking after jointing, being significant disadvantage of this technical solution as this does not provide acceptable service life of the reactor.

### Disclosure of invention

Task of this invention is development of a reactor for gases separation and/or carrying out chemical reactions, in particular, for oxygen extraction from oxygen-containing gas with ceramic oxygen-permeable membrane, said reactor having long service life because of strong tight joining of the ceramic membrane with the reactor body and because of the method of the said reactor manufacturing. The task set is resolved by the fact that in the reactor for gases separation and/or carrying out chemical reactions which comprises a body, a ceramic membrane, and, located between them, connecting element made of alloy containing elements of groups VIII and VI of Mendeleev's Periodic Table, a layer of aluminum oxide is formed on the surface of the connecting element adjacent to the membrane.

Aluminum oxide layer at the surface of connecting elements plays the role of transient layer to ensure strong connection of ceramic material of the membrane with metal alloy of the connecting element.

In the particular case of this invention implementation aluminum oxide layer is formed by alloy containing elements of groups VIII and VI of Mendeleev's Periodic Table, with the said joining made of alloy additionally containing aluminum by its heating in oxygen-containing gas at the temperature of 800 to 1100°C.

In another particular case, layer of aluminum oxide can be formed by its deposition over the surface of connecting element adjacent to the membrane. In the particular case of the invention alloy of the connecting element contains iron and chromium as elements of groups VIII and VI of Mendeleev's Periodic Table. Use of iron and chromium provides the best smoothing of dereference in thermal expansion coefficients.

In another particular case of this invention implementation the connecting element is part of the reactor body. This design allows enhanced strength of membrane sealing in the reactor by excluding additional component - connecting element, as well as makes manufacturing easier.

In one more particular case of this invention implementation there is a layer of high-temperature glue between the membrane and the connecting element, improving strength of membrane and connecting element sealing.

In various cases of this invention implementation surface of membrane connection with an element of the reactor can be flat, curved or a ring surface.

Another subject matter of this invention is a method of manufacturing reactor for gases separation and/or carrying out chemical reactions which comprises fixing of ceramic membrane in the reactor body with joining element made of alloy containing elements of groups VIII and VI of Mendeleev's Periodic Table, with the said joining made of alloy additionally containing aluminum, and then before membrane fixing said joining elements is heated in oxygen-containing gas at the temperature of 800 to 1100°C. Said heating results in exudation of aluminum oxide on the surface of joining element, adjacent to the membrane ensuring air-ting sealing and high strength of joining of the parts.

In the alternative version of the reactor a layer of aluminum oxide is applied from outside on the surface of joining elements made of alloy containing elements of groups VIII and VI.

In a particular case of this invention implementation, for additional sealing of membrane with joining element high-temperature glue is added between them.

### Brief description of drawings.

Fig. 1 shows simplified diagram of membrane reactor.
Fig. 2 shows a general view of zone of tubular membranes fixing in tube sheet.
Fig. 3 shows a cross section of tube sheet connection with tubular membranes.
Fig. 4 shows a general view of zone of planar membrane fixing in reactor with joining element.
Fig. 5 shows a cross section of planar membrane connection with joining element in reactor.
Fig. 6 shows a general view of zone of planar membrane fixing in reactor with joining element which is part of the reactor.
Fig. 7 shows a cross section of planar membrane connection with joining element which is part of the reactor.
Fig. 8 shows principle of operation of membrane reactor with oxygen-permeable membranes.

Best case of the invention implementation.

Reactor for gases separation and/or carrying out chemical reactions corresponding to this invention comprises a body, a ceramic membrane and a joining element located between them made of alloy containing elements of groups VIII and VI of Mendeleev's Periodic Table, with the said joining made of alloy additionally containing aluminum oxide located on the surface of the said joining elements adjacent to the membrane. Alloys used in reactor manufacturing are referred to high-temperature steels.

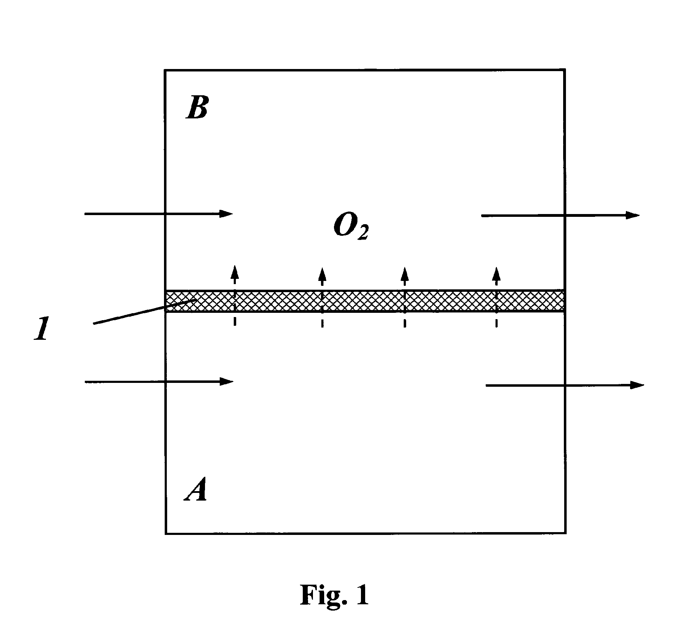

Ceramic membrane (1) (Fig. 1) divides space of reactor into two chambers. Oxygen-containing gas is fed into chamber A. Oxygen selectively passes through membrane into chamber B. The oxygen is either taken away from chamber B, or it reacts with reagents supplied to chamber B, in particular, with methane.

To fix the ceramic membrane in the body of reactor, in particular, oxygen-permeable membrane for oxygen extraction from oxygen-containing gas, a joining element is used made of an alloy containing elements of groups VIII and VI of Mendeleev's Periodic Table, the said element containing aluminum oxide of the surface adjacent to the membrane. Layer of aluminum oxide is formed by preliminary heating of the joining element made of alloy additionally containing aluminum, or by applying aluminum oxide layer on the said surface from alloy containing elements of groups VIII and VI.

Application of aluminum oxide layer can be achieved with any method known to a specialist, for example by spraying (laser, plasma, etc.), sedimentation, sole-gel method, etc.

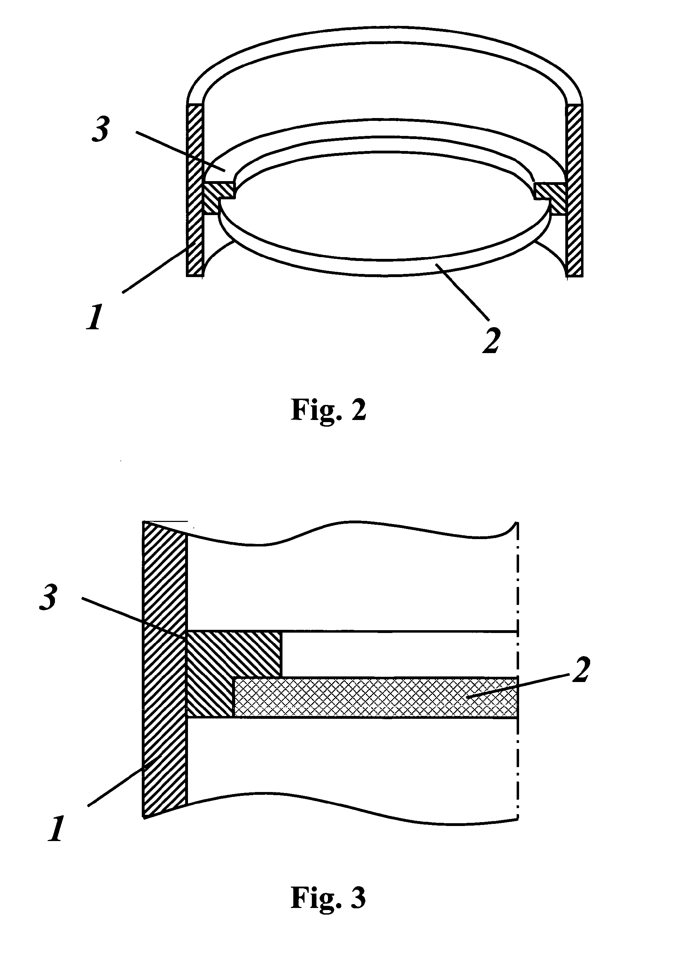

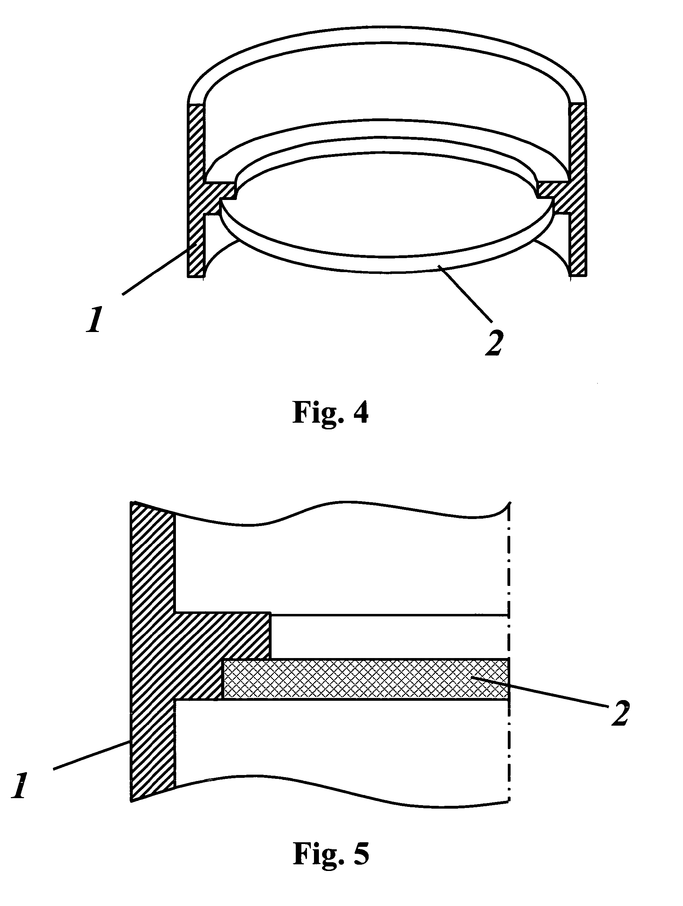

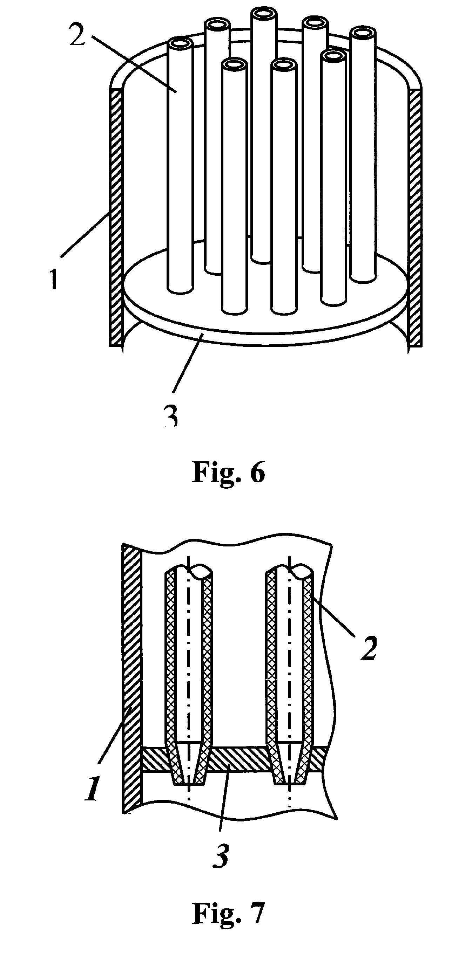

Design of joining element is determined by the purpose of reactor and form of ceramic membrane. For instance, surface of membrane joining with an element of reactor can be flat, curved or ring surface. In case of a flat (planar) membrane the joining elements are made, in particular, in the form of shell, see Figures 2 and 3. In particular case of this invention implementation joining elements can be a part of reactor body, see Figures 4 and 5. In case of tubular membrane, joining element can have the form of tube sheet, see Figures 6 and 7.

In the particular case of this invention implementation, shown in Figures 6 and 7, tubular ceramic membranes (2) are fixed (on one or both sides) in tube sheet (3), which plays the role of joining element. Tube sheet (3) is sealed with reactor body (1). Sealing of joining element with reactor body is done with one of the methods standard for chemical engineering, such as welding, embedment, soldering.

Version of this invention implementation, shown in Figures 2 and 3, refers to the case of flat (planar) ceramic membrane (2). In this case disc ceramic membrane is also sealed in tubular body of reactor (1) with a ring joining element (5). In another particular case of this invention implementation, illustrated in Figures 4 and 5, ceramic membrane (2) is sealed to a joining element which is a part of reactor body (1).

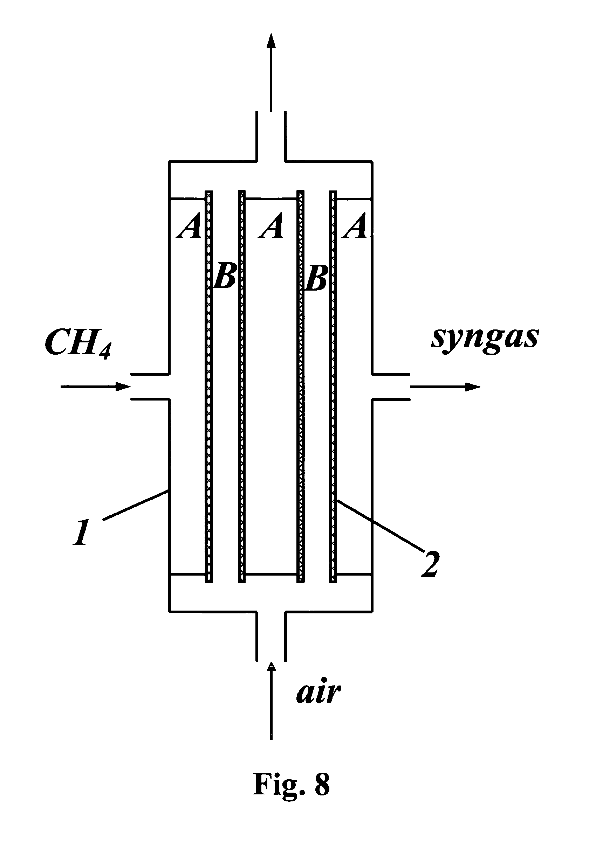

Reactor proposed in this invention can be used for separation of gases, in particular, for oxygen extraction from oxygen-containing gas with the aim of this oxygen further use first of all for oxidation reactions, for instance for partial oxidation of methane to syngas. Operation principle of membrane reactor with oxygen-permeable membrane for the case of methane partial oxidation to syngas is shown in Fig. 8. Oxygen-permeable ceramic membranes (2) divide space of reactor (1) into chambers A and B. Stream of air or another oxygen-containing gas is fed into chamber A. When air passes inside membranes part of oxygen comes through the membranes and into chamber B, filled with catalyst. To the same chamber B methane is fed which reacts with oxygen to form syngas.

Implementation of this invention is illustrated with Examples below which are not intended to confine the scope of the invention specified the claims, as the results obtained do not completely exhaust the scope of the carried out researches. In particular, in this case Examples used alloy containing iron, chromium and aluminum for resolution of this invention tasks.

### Example 1.

Tube sheet (3) (see Figures 6 and 7), which is a cylindrical array with taper holes made of alloy containing iron, chromium and aluminum, it treated with organic solvent to remove mechanical impurities and/or high-boiling organic compounds from its surface, it is then heated during 3 hour up to the temperature of 1000°C, hold at this temperature for 3 hours and cooled down to the room temperature. Treated in this way tube sheet (5) is sealed in reactor body (2) with welding. Layer of high-temperature glue is applied on the surface of the tube sheet (3) and tubular membranes (2) made of oxygen-permeable ceramics are fixed on the holes. Glue is dried at the temperature of 200°C. Opposite ends of tubular membranes are fixed in the same way. Space of chamber B between the tubular membrane (2) (see Fig. 8) and wall of reactor (2) is filled with a catalyst for methane conversion. Stream of air is fed inside the tubular membrane, and stream of methane is fed into internal space of the reactor. Reaction is carried out at the temperature of 850°C. Analysis of gaseous products of the reaction for the content of nitrogen shows absence of nitrogen which proves integrity of membrane sealing with the reactor.

Results of the reactor testing demonstrate that minimum 10 cycles of the process start-atop are carried out without damaging integrity of ceramic membrane sealing with the reactor.

### Example 2.

Joining element (3) (see Figures 2, 3) which is a ring is preliminary thermally treated with method describe in Example 1. This joining element (5) is sealed in reactors body (2) with welding. Planar membrane (2) made of oxygen-permeable ceramics is fixed in the joining element (3) with high-temperature glue. Glue is dried at the temperature of 200°C.

Stream of air is fed to the lower part of the reactor (chamber A, see Fig. 1), sealed with membrane (2) from the upper part (chamber B, see Fig. 1). Catalyst for methane conversion is placed into the upper part and stream of methane is fed to the same chamber. Reaction is carried out at the temperature of 850°C. Analysis of gaseous products of the reaction for the content of nitrogen shows absence of nitrogen which proves integrity of membrane sealing with the reactor.

Results of the reactor testing demonstrate that minimum 10 cycles of the process start-atop are carried out without damaging integrity of ceramic membrane sealing with the reactor.

### Example 3.

Experiment described in Example 2 is repeated except for preliminary thermal treatment which is done only for a part of the reactor body made of high-temperature alloy containing iron, chromium and aluminum, with this specific part of the body made, for example, in the form shown in Fig. 3, as it plays the role of joining element.

### Industrial application

The invention is intended for gas separation and/or for carrying out chemical reactions with membrane technologies, in particular, for oxidative conversion of hydrocarbon gas with oxygen-permeable membranes which is promising direction of gas processing development. Implementation of this invention will allow significant expansion of the possible application.

## Claims

1. A reactor for separation of gases and/or carrying out chemical reactions comprising reactor vessel (1), ceramic membrane (2) and a connecting element located between them (3) made of an alloy containing elements of groups VIII and VI of Mendeleev's Periodic Table, wherein a layer of aluminum oxide is formed on the surface of connecting element (3), adjacent to membrane (2).

2. The reactor of Claim 1 wherein said aluminum oxide alloy is formed of the said alloy additionally containing aluminum, by heating in oxygen-containing gas at temperature of 800°C to 1100°C.

3. The reactor of Claim 1 wherein said aluminum oxide alloy is formed by its applying on the surface of connecting elements adjacent to the membrane.

4. The reactor of Claim 1 or 2 wherein said alloy contains iron and chromium as elements of groups VIII and VI, respectively.

5. The reactor of Claim 3 wherein said alloy contains iron and chromium as elements of groups VIII and VI, respectively.

6. The reactor of Claim 1 or Claim 2 wherein there is a layer of high-temperature adhesive between said membrane and the surface of said connecting element adjacent to membrane.

7. The reactor of Claim 3 wherein there is a layer of high-temperature adhesive between said membrane and the surface of said connecting element adjacent to membrane.

8. The reactor of Claim 4 wherein there is a layer of high-temperature adhesive between said membrane and the surface of said connecting element adjacent to membrane.

9. The reactor of Claim 5 wherein there is a layer of high-temperature adhesive between said membrane and the surface of said connecting element adjacent to membrane.

10. The reactor of Claim 1 or Claim 2 wherein said connecting element is a part of reactor vessel.

11. The reactor of Claim 3 wherein said connecting element is a part of reactor vessel.

12. The reactor of Claim 4 wherein said connecting element is a part of reactor vessel.

13. The reactor of Claim 5 wherein said connecting element is a part of reactor vessel.

14. The reactor of Claim 6 wherein said connecting element is a part of reactor vessel.

15. The reactor of Claim 7 wherein said connecting element is a part of reactor vessel.

16. The reactor of Claim 8 wherein said connecting element is a part of reactor vessel.

17. The reactor of Claim 9 wherein said connecting element is a part of reactor vessel.

18. A method of manufacturing reactor for gas separation and/or chemical reactions, including ceramic membrane sealing in reactor vessel with a connecting element made of alloy containing elements of groups VIII and VI of Mendeleev's Periodic Table, wherein said alloy additionally contains aluminum; besides before the membrane sealing the connecting element is heated in oxygen-containing gas at temperature of 800 to 1100°C, or a layer of aluminum oxide is applied on the surface of the connecting elements adjacent to the membrane.

19. The method of Claim 18 wherein said ceramic membrane is additionally sealed by adding high-temperature adhesive between the above membrane and the connecting element.
